# EUROPÄISCHE PATENTSCHRIFT

(11) **EP 2 321 482 B1**
(45) Veröffentlichungstag und Bekanntmachung des Hinweises auf die Patenterteilung: **03.09.2014**
(21) Anmeldenummer: 09780977.6
(22) Anmeldetag: 23.07.2009
(51) Int. Cl.: E04F 15/02

(54) **FUSSBODENPANEEL MIT EINER TRÄGERSCHICHT AUS KUNSTSTOFF**
FLOOR PANEL WITH A PLASTIC BACKING
PANNEAU DE PLANCHER PRÉSENTANT UNE COUCHE SUPPORT EN MATIÈRE PLASTIQUE

(30) Priorität: 09.09.2008 DE 202008012001 U
(43) Veröffentlichungstag der Anmeldung: 18.05.2011
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Lippert, Stachow & Partner
(86) Internationale Anmeldenummer: PCT/EP2009/059488
(87) Internationale Veröffentlichungsnummer: WO 2010/028901

(56) Entgegenhaltungen:
- EP-A1- 1 229 181
- EP-A1- 1 382 774
- WO-A1-2007/040509
- DE-A1- 10 212 324
- US-A1- 2003 009 971

## Beschreibung

Die Erfindung betrifft ein Fußbodenpaneel umfassend eine Trägerschicht, die einen bei Gebrauchstemperatur eines Fußbodens biegeweichen und elastischen Kunststoff aufweist, eine oberhalb der Trägerschicht angeordnete Dekorschicht, wenigstens an zwei Paneelkanten vorgesehene komplementäre mechanische Verriegelungsmittel, die im verriegelten Zustand zweier Fußbodenpaneele zusammenwirken und einem Auseinanderbewegen der Fußbodenpaneele entgegenwirken, wobei zumindest eines der Verriegelungsmittel zumindest bereichsweise mit wenigstens einem Klebemittel versehen ist, und wobei das Klebemittel ein aktivierbares Klebemittel ist.

Aus der DE 199 44 399 A1 ist ein Fußbodenpaneel bekannt. Dieses weist eine Trägerschicht aus biegeweichem aber trotzdem weitgehend eindruckresistentem Kunststoff auf. Ehedem wurde für die Trägerschicht hartes, starres Holz oder holzartiger Werkstoff verwendet, der jedoch bei dem bekannten Fußbodenpaneel durch ein Kunststoffmaterial ersetzt ist.

Bei Fußbodenpaneelen aus verdichteten Holzfaserplatten mit mechanischen Verriegelungsmitteln, nimmt die Qualität und Festigkeit der mechanischen Verriegelung ab je dünner die Trägerschicht ist. Eine Trägerschicht aus Kunststoffmaterial weist demgegenüber eine höhere Festigkeit auf. Dadurch ist es möglich, Fußbodenpaneele herzustellen, die eine geringere Gesamtdicke aufweisen als Fußbodenpaneele mit einer Trägerschicht aus Holzfasermaterial.

Ein Fußbodenbelag aus gattungsgemäßen, im Wesentlichen aus Kunststoff bestehenden Fußbodenpaneelen eignet sich für eine schwimmende Verlegung, dass heißt, die Fußbodenpaneele liegen lose auf dem Untergrund; auf eine Klebeverbindung wird verzichtet. Temperaturschwankungen führen zu einer Ausdehnung oder Schrumpfung der einzelnen Fußbodenpaneele. Die auftretenden Kräfte belasten die mechanischen Verriegelungen und können ein Auseinanderbewegen der Fußbodenpaneele bewirken, sodass zwischen aneinandergrenzenden Paneelkanten ein Spalt entsteht. Derartige Spalte werden bei einem Fußbodenbelag als unästhetisch empfunden. Außerdem leidet die Widerstandsfähigkeit der Fußbodenoberfläche, wenn derartige Spalten entstehen.

Ein gattungsgemäßes Fußbodenpaneel offenbart die EP 1 382 774 A1. Es handelt sich um ein formschlüssig verbindbares Fußbodenpaneel mit einem zusätzlichen aktivierbaren Klebemittel. Das Klebemittel entfaltet seine Klebewirkung durch Druck- und Scherkräfte während der Montage. Ein weiteres Fußbodenpaneel mit aktivierbarem Klebemittel ist aus der DE 102 12 324 A1 bekannt. Die WO 2007/040509 schlägt hingegen ein Fußbodenpaneel mit Nut-Feder-Profil vor, dessen Feder mit einem Kanal versehen ist. Wenn die Fußbodenpaneele montiert sind muss Klebstoff nachträglich in den Kanal injiziert werden.

Der Erfindung liegt die Aufgabe zugrunde, einklebefähiges Fußbodenpaneel vorzuschlagen, das vielfältigere Einsatzmöglichkeiten aufweist.

Erfindungsgemäß wird die Aufgabe dadurch gelöst, dass das aktivierbare Klebemittel so ausgebildet ist, dass die Fußbodenpaneele verklebbar sind oder optional durch Verzicht auf eine Aktivierung ohne zusätzliche Klebeverbindung nur mechanisch verriegelbar sind.

Im zusammengefügten Zustand zweier Fußbodenpaneele wird durch den Formschluss der Verriegelungsmittel eine mechanische Verriegelung bewirkt. Zusätzlich kann durch das aktivierbare Klebemittel die mechanische Verriegelung nun durch eine Klebeverbindung verstärkt werden, die ebenfalls zwischen den zusammengefügten mechanischen Verriegelungsmitteln wirksam ist. Dabei erhält die Klebeverbindung ihre Festigkeit einerseits durch die Oberflächenhaftung zwischen Kleber und dem jeweiligen Fußbodenpaneel sowie durch die innere Festigkeit des Klebers selbst.

Diese Lösung bietet dem Anwender die Option, dass Klebemittel zu aktivieren oder auf eine Aktivierung zu verzichten und die Fußbodenpaneele ohne zusätzliche Klebeverbindung nur mechanisch zu verriegeln. Dies bietet sich beispielsweise dann an, wenn keine zu großen Kräfte auf die mechanische Verriegelung zu erwarten sind. Der Anwender kann einen Fußboden auch bereichsweise mit und bereichsweise ohne Klebemittelaktivierung verlegen und verriegeln. Wenn auf die Aktivierung des Klebemittels verzichtet wird, können die Fußbodenpaneele sehr einfach wieder entriegelt und aufgenommen werden, um sie beispielsweise wiederzuverwenden und erneut zu verlegen. Die Aktivierung des Klebemittels kann beispielsweise bei der zweiten Verwendung und erneuten Herstellung eines Fußbodens vorgenommen werden.

Jedes der komplementären Verriegelungsmittel kann zumindest bereichsweise mit einem Klebemittel versehen sein.

Das Klebemittel weist günstigerweise zwei Komponenten auf, die durch Kontakt miteinander aushärten.

Eine Ausführungsform mit zwei Komponenten kann entweder so ausgelegt sein, dass die oben beschriebene Option der Aktivierung des Klebemittels besteht. Dann können Fußbodenpaneele wahlweise ohne Klebemittelverbindung rein mechanisch verriegelt werden. Andererseits können die zwei Komponenten des Klebemittels so appliziert sein, dass während der Herstellung der mechanischen formschlüssigen Verriegelung zwangsläufig eine Aktivierung des Klebemittels erfolgt. Es ist beispielsweise möglich, ein Klebemittel in Mikrokapseln einzuschließen, die an der Oberfläche des/der Verriegelungsmittel angeordnet sind, beispielsweise angeklebt sind. Die Mikrokapseln sind so ausgebildet, dass sie durch den Vorgang der formschlüssigen Verriegelung zerstört werden, so dass die enthaltenen Klebemittel aus den Kapseln auslaufen und miteinander reagieren und aushärten.

Einfacherweise ist die erste Komponente des Klebemittels ein Kleber und die zweite Komponente des Klebemittels ein Härter. Dabei bewirkt ein Kontakt der ersten und zweiten Komponente eine Reaktion, durch die das Klebemittel aushärtet.

Um die Handhabung, insbesondere bei der Verlegung und Verriegelung der Fußbodenpaneele zu vereinfachen, kann die Kleber-Komponente des Klebemittels herstellerseitig an einem ersten der komplementären Verriegelungsmittel angebracht sein.

Die Handhabung der Fußbodenpaneele lässt sich weiter vereinfachen, wenn die Härter-Komponente des Klebemittels herstellerseitig an einem zweiten der komplementären Verriegelungsmittel angebracht ist.

Als Kunststoff der Trägerschicht kann ein Material aus der Gruppe der thermoplastischen Elastomere vorgesehen sein. Hierunter fallen beispielsweise Kunststoffe auf der Basis von Polyolefin, Polypropylen, Polyurethan oder Polyamid.

Andererseits kann als Kunststoff der Trägerschicht ein Material aus der Gruppe der amorphen Elastomere vorgesehen sein. Da diese jedoch eine natürliche Härte und Sprödigkeit aufweisen, sind solche amorphen Elastomere vorgesehen, die einen Weichmacher enthalten, beispielsweise sogenanntes Weich-Polyvinylchlorid (PVC).

Die Dicke des Fußbodenpaneels beträgt vorzugsweise 1,5 mm bis 6 mm.

Einfacherweise weist das Fußbodenpaneel vier Paneelkanten auf.

Eine zweckmäßige Ausführungsform sieht vor, dass wenigstens eine von zwei einander gegenüberliegenden Paneelkanten mit einer Nut und die gegenüberliegende Paneelkante mit einer komplementär zur Nut ausgebildeten Feder versehen ist.

Eine vorteilhafte Weiterbildung des Nut- und Feder-Fußbodenpaneels sieht vor, dass die Feder und die Nut jeweils eine Hinterschneidung aufweisen, dass die Hinterscheidung der Feder und die Hinterscheidung der Nut so gestaltet sind, dass sie im verriegelten Zustand einem Auseinanderbewegen der Fußbodenpaneele in deren Ebene und senkrecht zur verriegelten Paneelkante entgegenwirken.

Eine zusätzliche vorteilhafte Weiterbildung sieht vor, dass wenigstens zwei einander gegenüberliegende Paneelkanten mit komplementären Hakenelementen versehen sind, die in einer Richtung senkrecht zur Ebene der Fußbodenpaneele miteinander verriegelbar sind.

Selbstverständlich kann ein Fußbodenpaneel mit Nut und Feder an einem ersten Paar gegenüberliegender Paneelkanten versehen sein und komplementäre Hakenelemente an einem zweiten Paar gegenüberliegender Paneelkanten aufweisen.

Die Qualität der mechanischen Verriegelung durch die Hakenelemente kann verbessert werden, wenn jedes der Hakenelemente eine Hinterschneidung aufweist, die so gestaltet ist, dass im verriegelten Zustand eine Hakenverbindung entsteht, die einem Auseinanderbewegen der Fußbodenpaneele senkrecht zur Ebene der Fußbodenpaneele entgegenwirkt.

Zusätzlich kann zur Verbesserung der Formstabilität eine Verstärkungsschicht vorgesehen sein, die beispielsweise faserverstärktes Material aufweist, wie Fiberglas, etc. Die Verstärkungsschicht kann als wenigstens eine Zwischenschicht in einer geteilten Trägerschicht angeordnet sein.

Nachfolgend ist die Erfindung in einer Zeichnung beispielhaft dargestellt und anhand mehrerer schematischer Figuren beschrieben. Es zeigen:
- Fig. 1: eine perspektivische Ansicht eines Fußbodenpaneels mit formschlüssigen mechanischen Verriegelungsmitteln an den Paneelkanten,
- Fig. 2a, 2b: ausschnittsweise Darstellungen komplementärer Hakenelemente, wie sie an gegenüberliegenden Paneelkanten eines Fußbodenpaneels vorgesehen sein können,
- Fig. 3a, 3b: ausschnittsweise Darstellungen von Paneelkanten mit hinterschnittener Feder, die komplementär gestaltet ist zu einer Paneelkante mit hinterschnittener Nut, wie sie an gegenüberliegenden Paneelkanten eines Fußbodenpaneels vorgesehen sein können,
- Fig. 4: eine perspektivische Darstellung eines Fußbodenpaneels mit Nut und Feder an einem ersten Paar gegenüberliegender Paneelkanten sowie komplementären Hakenelementen an einem zweiten Paar gegenüberliegender Paneelkanten.

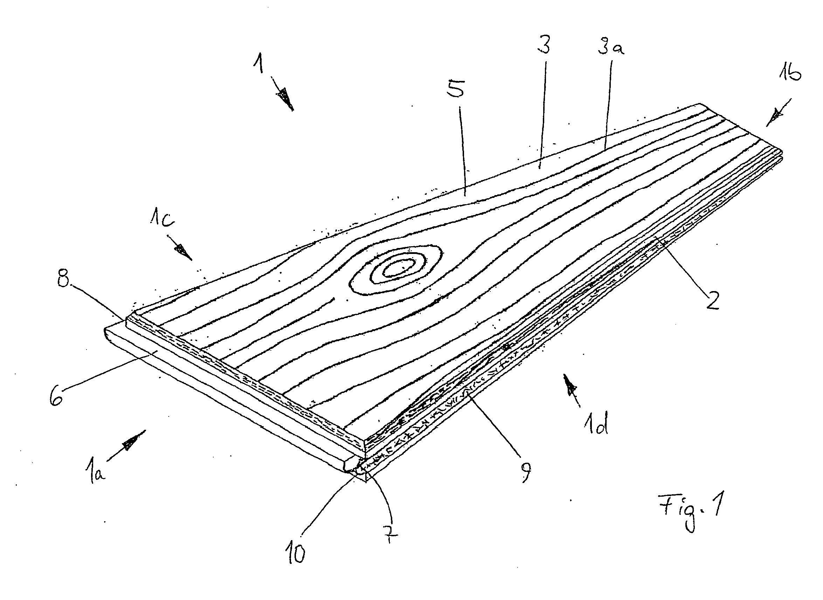

In Fig. 1 ist ein erfindungsgemäßes Fußbodenpaneel 1 mit Paneelkanten a1, 1b sowie 1c, 1d dargestellt. Es umfasst eine Trägerschicht 2 aus biegeweichem elastischem Kunststoff. Oberhalb der Trägerschicht 2 ist eine Dekorschicht 3 angeordnet. Die Dekorschicht 3 weist eine Abbildung einer Holzmaserung 3a auf. Auf der Dekorschicht 3 ist eine transparente Verschleißschutzschicht 5 vorgesehen. Es sind mechanische Verriegelungsmittel vorgesehen, nämlich ein erstes Paar Paneelkanten 1a und 1b, dessen eine Paneelkante 1a eine Feder 6 mit Hinterschneidung 7 aufweist. Die gegenüberliegende Paneelkante 1b ist mit einer komplementär zur Feder 6 ausgebildeten Nut versehen. Ein zweites Paar gegenüberliegender Paneelkanten ist ebenfalls mit einer Paneelkante 1c versehen, die eine Feder 8 mit Hinterschneidung aufweist, während die gegenüberliegende Paneelkante 1d eine komplementär zur Feder 8 ausgebildete Nut 9 mit Hinterschneidung 10 aufweist.

Außer diesen mechanischen Verriegelungsmitteln können auch andere Arten mechanischer Verriegelungsmittel an einem oder beiden Paaren gegenüberliegender Paneelkanten vorgesehen sein.

Zusätzlich zur mechanischen Verriegelung ist die Paneelkante 1d bereichsweise mit einem Klebemittel K1 versehen, das zur Herstellung einer Klebeverbindung dient. Die Klebeverbindung ist im zusammengefügten zweier Fußbodenpaneele ebenfalls zwischen den mechanischen Verriegelungsmitteln wirksam.

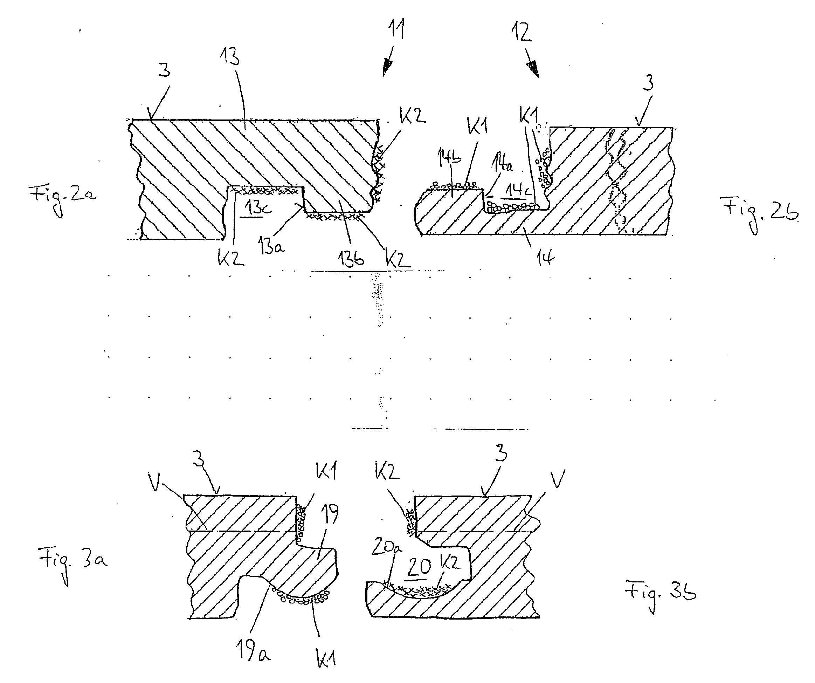

Die Figuren 2a und 2b zeigen Paneelkanten 11 und 12 mit mechanischen Verriegelungsmitteln in Form von Hakenelementen 13 und 14. Die Hakenelemente 13 und 14 weisen jeweils eine Hinterschneidungsfläche 13a beziehungsweise 14a auf, die im verriegelten Zustand zweier Fußbodenpaneele ein Auseinanderbewegen der Fußbodenpaneele in deren Paneelebene sowie senkrecht zur verriegelten Paneelkante 11 beziehungsweise 12 verhindern. Die hierfür vorgesehenen Hinterschneidungsflächen sind jeweils an einem senkrecht zur Paneelebene vorstehenden Bereich 13b beziehungsweise 14b des jeweiligen Hakenelements vorgesehen. Dem senkrecht vorstehenden Bereich 13b beziehungsweise 14b benachbart ist eine Hakenausnehmung 13c beziehungsweise 14c, die so gestaltet ist, dass jeweils der senkrecht vorstehende Bereich 13b beziehungsweise 14b des Hakenelements des angrenzenden Fußbodenpaneels in diese Hakenausnehmung 13c beziehungsweise 14c hineinpasst.

Die Paneelkanten 11 und 12 sind bereichsweise mit einem Klebemittel versehen. Das Klebemittel weist eine erste Komponente K1 auf, die an der Paneelkante 12 angeordnet ist und eine zweite Komponente K2, die an der Paneelkante 11 angeordnet ist. Die Komponente K1 ist ein Kleber und die Komponente K2 ist ein Härter. Im zusammengefügten Zustand der beiden Paneelkanten 11 und 12 härtet der Kleber K1 durch Reaktion mit dem Härter K2 aus. Die formschlüssige Verbindung der Paneelkanten 11 und 12 wird durch die stoffschlüssige Klebeverbindung verstärkt.

Die Figuren 3a und 3b zeigen Paneelkanten mit einer anderen Art komplementärer Verriegelungsmittel, nämlich Feder und Nut basierenden Verriegelungsmitteln, wie bereits im Ausführungsbeispiel gemäß Fig. 1 enthalten. Die Paneelkante gemäß Fig. 3a weist eine Feder 19 mit Hinterschneidung 19a auf, während die Paneelkante gemäß Fig. 3b eine komplementär zur vorbeschriebenen Feder 19 ausgebildete Nut 20 mit Hinterschneidung 20a aufweist. Zur Verriegelung von Nut- und Feder wird das Fußbodenpaneel mit der Feder 19 schräg angewinkelt und die Feder 19 in die Nut 20 eingefügt. Anschließend wird das angewinkelte Fußbodenpaneel in die Ebene des anderen Fußbodenpaneels herabgeschwenkt. Dabei entsteht eine formschlüssige mechanische Verriegelung.

Die Paneelkanten gemäß Fig. 3a und 3b sind ebenfalls bereichsweise mit einem Klebemittel versehen. Das Klebemittel weist eine erste Komponente K1 auf, die an der Paneelkante mit der Feder 19 angeordnet ist und eine zweite Komponente K2, die an der Paneelkante mit der Nut 20 angeordnet ist. Die Komponente K1 ist ein Kleber und die Komponente K2 ist ein Härter. Im zusammengefügten Zustand von Feder 19 und Nut 20 härtet der Kleber K1 durch Reaktion mit dem Härter K2 aus. Auch diese formschlüssige Verbindung der Paneelkanten wird durch die stoffschlüssige Klebeverbindung verstärkt.

Gemäß den Figuren 3a und 3b ist an einer Oberseite der Fußbodenpaneele eine Dekorschicht 3 vorgesehen. Die Trägerschicht kann, wie durch die gestrichelte Linie angedeutet, geteilt sein, wobei eine Verstärkungsschicht V vorgesehen ist, welche die Formstabilität des Fußbodenpaneels verbessert.

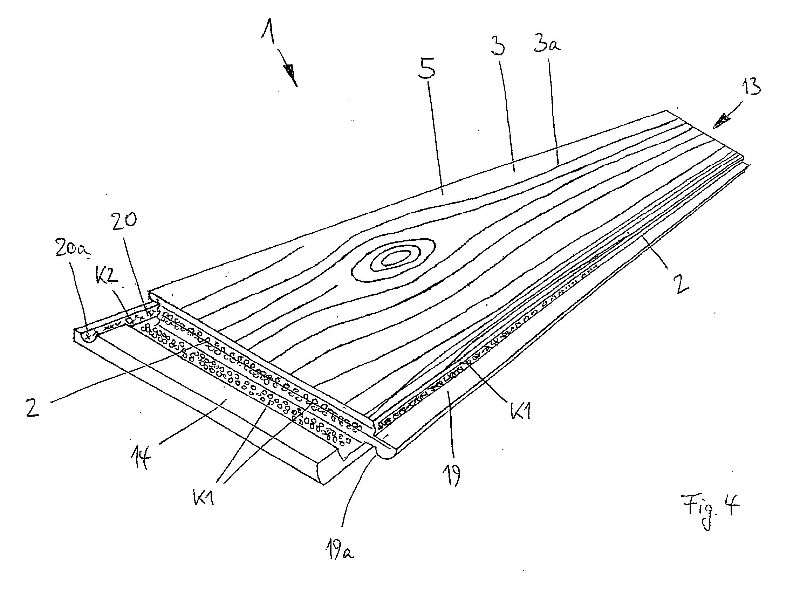

Fig. 4 zeigt eine perspektivische Darstellung eines alternativen Fußbodenpaneels 1, das an einem ersten Paar gegenüberliegenden Paneelkanten 1c und 1d komplementärer Verriegelungsmittel in Form einer Feder 19 mit Hinterschneidung 19a aufweist. Die Feder 19 ist an einer Paneelkante 1d vorgesehen. Eine komplementäre Nut 20 mit Hinterschneidung 20a ist an der gegenüberliegenden Paneelkante 1c vorgesehen.- Das zweite Paar Paneelkanten 1a und 1b weist komplementäre Hakenelemente 13 beziehungsweise 14, wie anhand der Figuren 2a und 2b beschrieben. Das alternative Fußbodenpaneel 1 umfasst eine Trägerschicht 2 aus biegeweichem elastischem Kunststoff. Oberhalb der Trägerschicht 2 ist eine Dekorschicht 3 angeordnet. Die Dekorschicht 3 weist eine Abbildung einer Holzmaserung 3a auf. Auf der Dekorschicht 3 ist eine transparente Verschleißschutzschicht 5 vorgesehen.

### Bezugszeichenliste

- 1: Fußbodenpaneel
- 1a: Paneelkante
- 1b: Paneelkante
- 1c: Paneelkante
- 1d: Paneelkante
- 2: Trägerschicht
- 3: Dekorschicht
- 3a: Holzmaserung
- 5: Verschleißschutzschicht
- 6: Feder
- 7: Hinterschneidung
- 8: Feder
- 9: Nut
- 10: Hinterschneidung
- 11: Paneelkante
- 12: Paneelkante
- 13: Hakenelement
- 13a: Hinterschneidungsfläche
- 13b: senkrecht vorstehender Bereich
- 14: Hakenelement
- 14a: Hinterschneidungsfläche
- 14b: senkrecht vorstehender Bereich
- 19: Feder
- 19a: Hinterschneidung
- 20: Nut
- 20a: Hinterschneidung
- V: Verstärkungsschicht
- K1: erste Komponente (Kleber)
- K2: zweite Komponente (Härter)

## Patentansprüche

1. Fußbodenpaneel (1) umfassend eine Trägerschicht (2) die einen bei Gebrauchstemperatur eines Fußbodens biegeweichen und elastischen Kunststoff aufweist, eine oberhalb der Trägerschicht (2) angeordnete Dekorschicht (3), wenigstens an zwei Paneelkanten (1a, 1b, 1c, 1d, 11, 12) vorgesehene komplementäre mechanische Verriegelungsmittel (8, 9, 13, 14), die im verriegelten Zustand zweier Fußbodenpaneele (1) zusammenwirken und einem Auseinanderbewegen der Fußbodenpaneele (1) entgegenwirken, wobei zumindest eines der Verriegelungsmittel (8, 9, 13, 14) zumindest bereichsweise mit wenigstens einem Klebemittel (K1, K2) versehen ist, und wobei das Klebemittel ein aktivierbares Klebemittel ist, **dadurch gekennzeichnet, dass** das aktivierbare Klebemittel (K1, K2) so ausgebildet ist, dass die Fußbodenpaneele verklebbar sind oder optional durch Verzicht auf eine Aktivierung ohne zusätzliche Klebeverbindung nur mechanisch verriegelbar sind.

2. Fußbodenpaneel nach Anspruch 1, **dadurch ge kennzeichnet,** dass jedes der komplementären Verriegelungsmittel (8, 9, 13, 14) zumindest bereichsweise mit einem Klebemittel (K1, K2) versehen ist.

3. Fußbodenpaneel nach Anspruch 2, **dadurch gekennzeichnet, dass** das Klebemittel (K1, K2) zwei Komponenten (K1, K2) aufweist, die durch Kontakt miteinander aushärten.

4. Fußbodenpaneel nach Anspruch 3, **dadurch gekennzeichnet, dass** die erste Komponente (K1) des Klebemittels ein Kleber und die zweite Komponente (K2) des Klebemittels ein Härter ist.

5. Fußbodenpaneel nach Anspruch 4, **dadurch gekenn- zeichnet,** dass die Kleber-Komponente (K1) des Klebemittels herstellerseitig an einem ersten der komplementären Verriegelungsmittel (8, 9, 13, 14) angebracht ist.

6. Fußbodenpaneel nach Anspruch 4 oder 5, **dadurch gekennzeichnet, dass** die Härter-Komponente (K2) des Klebemittels herstellerseitig an einem zweiten der komplementären Verriegelungsmittel (8, 9, 13, 14) angebracht ist.

7. Fußbodenpaneel nach einem der Ansprüche 1 bis 6, **dadurch gekennzeichnet, dass** als Kunststoff der Trägerschicht (2) ein Material aus der Gruppe der thermoplastischen Elastomere vorgesehen ist.

8. Fußbodenpaneel nach einem der Ansprüche 1 bis 6, **dadurch gekennzeichnet, dass** als Kunststoff der Trägerschicht (2) ein Material aus der Gruppe der amorphen Elastomere vorgesehen ist, wobei dem amorphen Elastomer Weichmacher zugesetzt sind.

9. Fußbodenpaneel nach Anspruch 8, **dadurch gekennzeichnet, dass** der Kunststoff ein Polyvinylchlorid (PVC) ist.

10. Fußbodenpaneel nach einem der Ansprüche 1 bis 9, **dadurch gekennzeichnet, dass** seine Dicke 1, 5 mm bis 6 mm beträgt.

11. Fußbodenpaneel nach einem der Ansprüche 1 bis 10, **dadurch gekennzeichnet, dass** es vier Paneelkanten (1a, 1b, 1c, 1d, 11, 12) aufweist.

12. Fußbodenpaneel nach Anspruch 11, **dadurch gekennzeichnet , dass** wenigstens eine von zwei einander gegenüberliegenden Paneelkanten (1a, 1b, 1c, 1d, 11, 12) mit einer Nut (20) und die gegenüberliegende Paneelkante mit einer komplementär zur Nut ausgebildeten Feder (19) versehen ist.

13. Fußbodenpaneel nach Anspruch 12, **dadurch gekennzeichnet, dass** die Feder (19) und die Nut (20) jeweils eine Hinterschneidung (19a, 20a) aufweisen, dass die Hinterscheidung (19a) der Feder (19) und die Hinterscheidung (20a) der Nut (20) so gestaltet sind, dass sie im verriegelten Zustand einem Auseinanderbewegen der Fußbodenpaneele (1) in deren Ebene und senkrecht zur verriegelten Paneelkante (1a, 1b, 1c, 1d, 11, 12) entgegenwirken.

14. Fußbodenpaneel nach einem der Ansprüche 11 bis 13, **dadurch gekennzeichnet, dass** wenigstens zwei einander gegenüberliegende Paneelkanten (1a, 1b, 1c, 1d, 11, 12) mit komplementären Hakenelementen (13, 14) versehen sind, die in einer Richtung senkrecht zur Ebene der Fußbodenpaneele (1) miteinander verriegelbar sind.

15. Fußbodenpaneel nach Anspruch 14, **dadurch gekennzeichnet, dass** jedes der Hakenelemente (13, 14) eine Hinterschneidungsfläche (13a, 14a) aufweist, die so gestaltet ist, dass im verriegelten Zustand eine Hakenverbindung entsteht, die einem Auseinanderbewegen der Fußbodenpaneele (1) senkrecht zur Ebene der Fußbodenpaneele (1) entgegenwirkt.

16. Fußbodenpaneel nach einem der Ansprüche 1 bis 15, **dadurch gekennzeichnet, dass** eine Verstärkungsschicht (V) vorgesehen ist.

17. Fußbodenpaneel nach Anspruch 16, **dadurch gekennzeichnet, dass** die Verstärkungsschicht (V) faserverstärktes Material aufweist.

18. Fußbodenpaneel nach Anspruch 16 oder 17, **dadurch gekennzeichnet, dass** die Verstärkungsschicht (V) als wenigstens eine Zwischenschicht in einer geteilten Trägerschicht (2) angeordnet ist.

## Claims

1. Floor panel (1) comprising a backing (2) which exhibits a plastics material that is pliable and flexible at the temperature at which a floor is used, comprising a decorative layer (3) disposed above the backing, comprising complementary mechanical locking means (8, 9, 13, 14), which are provided at at least two edges of the panel (1a, 1b, 1c, 1d, 11, 12), interact in the locked state of two floor panels (1) and counteract movement apart of the floor panels (1), wherein at least one of the locking means (8, 9, 13, 14) is provided at least in certain regions with at least one adhesive 8(K1, K2), and wherein the adhesive is an activatable adhesive.

2. Floor panel according to claim 1, **characterized in that** each of the complementary locking means (8, 9, 13, 14) is provided at least in regions thereof with an adhesive (K1, K2).

3. Floor panel according to claim 2, **characterized in that** the adhesive (K1, K2) comprises two components (K1, K2) which are cured by the contact with each another.

4. Floor panel according to claim 3, **characterized in that** the first component (K1) of the adhesive is glue and the second component (K2) of the adhesive is a hardener.

5. Floor panel according to claim 4, **characterized in that** the adhesive component (K1) of the adhesive is factory-provided on a first one of the complementary locking means (8, 9, 13, 14).

6. Floor panel according to claim 4 or 5, **characterized in that** the hardener component (K2) of the adhesive is factory-provided on a second one of the complementary locking means (8, 9, 13, 14).

7. Floor panel according to one of the claims 1 to 6, **characterized in that** as a plastics material of the backing (2) a material from the group of thermoplastic elastomers is provided.

8. Floor panel according to one of the claims 1 to 6, **characterized in that** as a plastics material of the backing (2) a material from the group of amorphous elastomers is provided, wherein plasticizers are added to the amorphous elastomer.

9. Floor panel according to claim 8, **characterized in that** the plastics material is polyvinylchloride (PVC).

10. Floor panel according to one of the claims 1 to 9, **characterized in that** its thickness amounts to 1.5 mm to 6 mm.

11. Floor panel according to one of the claims 1 to 10, **characterized in that** it includes four panel edges (1a, 1b, 1c, 1d, 11, 12 ) .

12. Floor panel according to claim 11, **characterized in that** at least one of two mutually opposite panel edges (1a, 1b, 1c, 1d, 11, 12) is provided with a groove (20) and the opposite panel edge is provided with a tongue (19) formed complementary to the groove.

13. Floor panel according to claim 12, **characterized in that** the tongue (19) and the groove (20) each include an undercut, that the undercut (19a) of the tongue (19) and the undercut (20a) of the groove (20) are designed in such a manner that in the locked state they counteract movement apart of the floor panels (1) in their plane and vertically to the locked panel edge (1a, 1b, 1c, 1d, 11, 12).

14. Floor panel according to one of the claims 11 to 13, **characterized in that** at least two mutually opposite panel edges (1a, 1b, 1c, 1d, 11, 12) are provided with complementary hook elements (13, 14) that are lockable to one another in a direction vertical to the plane of the floor panels (1).

15. Floor panel according to claim 14, **characterized in that** each of the hook elements (13, 14) includes an undercut surface (13a, 14a) that is designed in such a manner that in the locked state a hook connection is produced that counteracts movement apart of the floor panels (1) vertically to the plane of the floor panels (1) .

16. Floor panel according to one of the claims 1 to 15, **characterized in that** a reinforcement layer (V) is provided.

17. Floor panel according to claim 16, **characterized in that** the reinforcement layer (V) includes fiber-reinforced material.

18. Floor panel according to claim 16 or 17, **characterized in that** the reinforcement layer (V) is arranged as at least one intermediate layer in a split backing (2).

## Revendications

1. Panneau de plancher (1) présentant une couche support (2) en matière flexible et élastique à la température d'usage d'un plancher, une couche décorative (3) disposée au-dessus de la couche support (2); ainsi que des moyens de verrouillage mécaniques complémentaires (8, 9, 13, 14), prévus au moins aux deux bords (1a, 1b, 1c, 1d, 11, 12) de panneau, qui maintiennent ensemble, à l'état verrouillé, deux panneaux de plancher (1) et qui s'opposent à un désassemblage des panneaux de plancher (1), au moins l'un des moyens de verrouillage (8, 9, 13, 14) présentant, au moins partiellement, au moins un adhésif (K1, K2) et ledit adhésif étant un adhésif activable, **caractérisé en ce que** l'adhésif activable (K1, K2) est agencé de telle façon que les panneaux de plancher peuvent être lutés ou, d'une manière optionnelle, peuvent être verrouillés seulement mécaniquement sans un joint adhésif, en abandonnant une activation.

2. Panneau de plancher selon la revendication 1, **caractérisé en ce que** chacun des moyens de verrouillage (8, 9, 13, 14) est prévus d'un adhésif (K1, K2), au moins en parties.

3. Panneau de plancher selon la revendication 2, **caractérisé en ce que** l'adhésif (K1, K2) comporte deux composants (K1, K2) durcissant par le contact l'un avec l'autre.

4. Panneau de plancher selon la revendication 3, **caractérisé en ce que** le premier composant (K1) de l'adhésif est une colle et le deuxième composant (K2) de l'adhésif est un durcisseur.

5. Panneau de plancher selon la revendication 4, **caractérisé en ce que** le composant colle de l'adhésif (K1) est apposé, de la part du fabricant, sur un premier des moyens de verrouillage complémentaires (8, 9, 13, 14).

6. Panneau de plancher selon la revendication 4 ou 5, **caractérisé en ce que** le composant durcisseur (K2) de l'adhésif est apposé, de la part du fabricant, sur un deuxième des moyens de verrouillage complémentaires (8, 9, 13, 14).

7. Panneau de plancher selon l'une des revendications 1 à 6, **caractérisé en ce que** comme la matière plastique de la couche support (2) est prévue une matière du groupe des élastomères amorphes.

8. Panneau de plancher selon l'une des revendications 1 à 6, **caractérisé en ce que** comme la matière plastique de la couche support (2) est prévue une matière du groupe des élastomères amorphes, des plastifiants étant ajoutés à l'élastomère amorphe.

9. Panneau de plancher selon la revendication 8, **caractérisé en ce que** la matière plastique est un chlorure de polyvinyle (PVC).

10. Panneau de plancher selon l'une des revendications 1 à 9, **caractérisé en ce que** son épaisseur est 1,5 mm à 6 mm.

11. Panneau de plancher selon l'une des revendications 1 à 10, **caractérisé en ce qu'**il présente quatre bords de panneau (1a, 1b, 1c, 1d, 11, 12).

12. Panneau de plancher selon l'une des revendications 1 à 10, **caractérisé en ce qu'**au moins un de deux bords opposés du panneau (1a, 1b, 1c, 1d, 11, 12) est muni d'une rainure (20) et le bord opposé du panneau est muni d'une languette (19) formé d'une manière complémentaire à la rainure.

13. Panneau de plancher selon la revendication 12, **caractérisé en ce que** la languette (19) et la rainure (20) respectivement présentent une contre-dépouille (19a, 20a), que la contre-dépouille (19) de la languette (19) et la contre-dépouille (20a) de la rainure sont agencées de la sorte que, à l'état verrouillé, ils opposent à un désassemblage des panneaux de plancher (1) dans son plan perpendiculaire au bord verrouillé (1a, 1b, 1c, 1d, 11, 12) du panneau.

14. Panneau de plancher selon l'une des revendications 11 à 13, **caractérisé en ce qu'**au moins deux bords opposés (1a, 1b, 1c, 1d, 11, 12) du panneau sont munis des éléments à crochet (13, 14) complémentaires qui peuvent être verrouillés l'un à l'autre en une direction perpendiculaire au plan des panneaux de plancher (1).

15. Panneau de plancher selon la revendication 14, **caractérisé en ce que** chacun des éléments à crochet (13, 14) présent une surface contre-dépouillée (13a, 14a) formée de la sorte que, à l'état verrouillé, est produit une liaison à crochet qui s'oppose à un désassemblage des panneaux de plancher (1) perpendiculairement au plan des panneaux de plancher (1).

16. Panneau de plancher selon l'une des revendications 1 à 15, **caractérisé en ce qu'**est prévue une couche de renforcement (V) .

17. Panneau de plancher selon la revendication 16, **caractérisé en ce que** la couche de renforcement (V) comporte une matière renforcée fibres.

18. Panneau de plancher selon l'une des revendications 16 ou 17, **caractérisé en ce que** la couche de renforcement (V) est arrangée dans une couche support (2) divisée comme au moins une couche intermédiaire.
